# EUROPÄISCHE PATENTSCHRIFT

(11) **EP 0 956 678 B1**
(45) Veröffentlichungstag und Bekanntmachung des Hinweises auf die Patenterteilung: **28.07.2004**
(21) Anmeldenummer: 98909307.5
(22) Anmeldetag: 28.01.1998
(51) Int. Cl.: H04L 9/08

(54) **VERFAHREN UND EINRICHTUNG ZUR EINBRINGUNG EINES DIENSTSCHLÜSSELS IN EIN ENDGERÄT**
METHOD AND DEVICE FOR INTRODUCING A SERVICE KEY INTO A TERMINAL
PROCEDE ET DISPOSITIF PERMETTANT D'INTRODUIRE UNE CLE DE SERVICE DANS UN TERMINAL

(30) Priorität: 03.02.1997 DE 19705050; 23.10.1997 DE 19747827
(43) Veröffentlichungstag der Anmeldung: 17.11.1999
(73) Patentinhaber: ATX Europe GmbH, 40547 Düsseldorf (DE)
(72) Erfinder: VIEWEG, Stefan, D-47877 Willich (DE); SCHMIDT, Maik, D-40667 Meerbusch (DE)
(74) Vertreter: Meissner, Peter E., Dipl.-Ing.
(86) Internationale Anmeldenummer: PCT/DE1998/000277
(87) Internationale Veröffentlichungsnummer: WO 1998/034371

(56) Entgegenhaltungen:
- DE-A- 3 631 797
- US-A- 4 613 901
- US-A- 4 910 773
- V.VARADHARAJAN; P W SANDERS: "Practical secure electronic mail system with public key distribution" COMPUTER COMMUNICATIONS (UK), 3.Juni 1995, GUILDFORD, SURREY, GREAT-BRITAIN, Seiten 121-127, XP002068911

## Beschreibung

Die Erfindung betrifft ein Verfahren zur Einbringung eines Dienstschlüssels in ein Endgerät.
Im Bereich der Verkehrstelematik werden kostenpflichtige Dienstleistungen, also Dienstinformationen in Form von aktuellen Verkehrsmeldungen, Verkehrsprognosen, Navigationshilfen etc. von einer Zentrale zu jeweils einem Endgerät eines Dienstleistungsnutzers verschlüsselt übertragen. Nur ein Endgerät mit einem Dienstschlüssel für für einen oder mehrere gebuchte Dienste von der Zentrale an das Endgerät übertragene Dienstedaten kann die den jeweiligen Dienst betreffenden Dienstedaten entschlüsseln und dem Nutzer des Endgerätes zur Verfügung stellen. Eine Codierung ist insbesondere erforderlich, wenn die Übertragung von Dienstedaten von der Zentrale an Endgeräte über einen öffentlichen Kommunikationskanal, z.B. einen Radiokanal erfolgt. Auch bei einer Übertragung von Dienstedaten über einen privaten Kommunikationskanal, wie einen Mobitfunk-Kurznachrichtenkanal (GSM.SMS), ist ein Autentizitätsnachweis des Endgerätes gegenüber der Zentrale oder eine Decodierung von in der Zentrale verschlüsselten Daten durch einen Schlüssel im Endgerät erforderlich.

Es sind Verfahren bekannt, bei welchen ein zur Autentizitätsprüfung bei der Kontaktaufnahme zwischen Endgerät und Dienstleistungszentrale oder zur Codierung/Decodierung von von der Zentrale an das Endgerät übertragenen Dienstedaten verwendbares Geheimnis von einem Endgerätehersteller in das Endgerät eingebracht wird und an die Dienstleistungszentrale übermittelt wird. Hierzu ist jedoch ein abhörsicherer Kommunikationskanal zwischen dem Endgerätehersteller und der Zentrale erforderlich. Die Übermittlung der Geheimnisse impliziert einen erheblichen logistischen Aufwand und die Gefahr von Fehlern.

Aus der DE-A 3 631 797 ist ein Verfahren bekannt, bei dem zwei Kommunikationsendpunkte sicher miteinander kommunizieren sollen, wobei hierzu ein Austausch-und Erzeugungsverfahren von temporären, öffentlichen und privaten Schlüsseln eingesetzt wird. Beide Kommunikationsendpunkte sind rollengleich, d.h. jeder kann jeden Teil eines Schlüsselpaares erzeugen und eine verschlüsselte Kommunikation anregen. Der Vorrichtungsaufbau weist somit zwei inhaltsgleiche Einrichtungen auf.

Aufgabe der vorliegenden Erfindung ist das einfache, kostengünstige, effiziente und möglichst fehlerunanfällige Ermöglichen des Einbringens eines Dienstschlüssels zum Entschlüsseln von von einer Zentrale verschlüsselt übermittelten Dienstedaten in ein Endgerät. Die Aufgabe wird durch den Anspruch 1 gelöst. Ausgestaltungen ergeben sich aus den Unteransprüchen.
Erfindungsgemäß ist ein einen oder mehrere Dienste betreffender Diensteschlüssel einer Zentrale einfach, effizient und fehlerunanfällig in ein Endgerät einbringbar. Durch die verschlüsselte Übertragung zwischen der Zentrale und dem Endgerät und durch die hinsichtlich ihrer Ergebnisse bei gleichem Initialisierungsschlüssel identischen Algorithmen (insbesondere mit einem Zufallsgenerator) in der Zentrale und im Endgeräteprogrammiergerät beim Hersteller ergibt sich eine hohe Abhörsicherheit. Wenn der Initialisierungswert und der Decodierungsschlüssel vom Endgerätprogrammiergerät (eines Herstellers etc.) in ein Endgerät eingebracht werden, worauf der Initiatisierungsschlüssel vom Endgerät (beispielsweise über einen abhörsicheren Kanal wie einen Telekommunikationskanal, insbesondere Mobilfunkkanal) an die Zentrale übertragen wird, ist keinerlei Kommunikation zwischen dem Hersteller und der Zentrale bei der Schlüsseleinbringung mehr erforderlich. Hierdurch wird das Verfahren sehr einfach, der administrative Aufwand beim Hersteller wird erheblich verringert, und Fehler werden vermieden.

Die Endgeräte können insbesondere Telematikendgeräte sein, die Zentrale kann eine Verkehrszentrale sein, Dienstedaten können insbesondere Verkehrstedematikdaten (wie Verkehrsinformationen, Verkehrsprognosen, Navigationshilfen etc.) sein.

Das erfindungsgemäße Verfahren ist mit unterschiedlichen Public-Key//Private Key-Codierungs-/Decodierungsverfahren implementierbar. Dabei entspricht der Decodierschlüssel einem Private-Key und der Codierschlüssel einen Public-Key.

Insbesondere ist das effiziente RSA-Verfahren geeignet. Ferner können auch andere Public-Key/Private-Key-Verfahren mit diskreten Logarithmen, elliptischen Kurven, dem Knapsack-Algorithmus und andere verwendet werden.

Die Übertragung des Dienstschlüssels von der Zentrale an ein Endgerät kann mit unterschiedlichen Verschlüsselungs-/Entschlüsselungsverfahren erfolgen. Neben asymmetrischen Verfahren (Public-Key/Private-Key) können auch symmetrische Verfahren verwendet werden. Relativ schnell in der Decodierung ist bei mittlerer Sicherheit das DES-Verfahren.

Der Algorithmus, der identisch oder ergebnisidentisch im Endgerätprogrammiergerät eines Herstellers und in der Zentrale implementiert ist, kann insbesondere einen Pseudozufallszahlengenerator enthalten. Ein derartiger Pseudozufallszahlengenerator liefert bei Eingabe eines bestimmtes Initialisierungswertes immer den gleichen Ausgangswert. Bei Verwendung eines Zufallsgenerators zur Erzeugung eines Codierungsschlüssels und eines Decodierungsschlüssels nach dem RSA-Verfahren können beispielsweise aus den von einem beliebigen Zufallsgenerator gelieferten Zahlen Primzahlen derart erstellt werden, daß die zu den gelieferten Zufallszahlen nächsthöheren Primzahlen erzeugt werden. Dabei werden zwei, vorzugsweise höherwertige als 10¹⁰⁰, Primzahlen mit dem Zufallsgenerator und einem nachgeschalteten Algorithmus zur Eingabe in den RSA-Codier-/Decodierschlüsselgenerator eingegeben. Ferner kann auch direkt ein standardisierter Primzahlengenerator verwendet werden. Der Codierschlüssel und Decodierschlüssel entsprechen den beiden Ausgangswerten eines RSA-Schlüssel-Generators.

Die Übermittlung zwischen dem Endgerät und der Zentrale erfolgt zweckmäßig per Telekommunikation, insbesondere per Mobilfunk. Besonders einfach und hinsichtlich der Automatisierbarkeit effizient ist die Übertragung als digitale Mobilfunkkurznachricht, beispielsweise GSM-SMS.

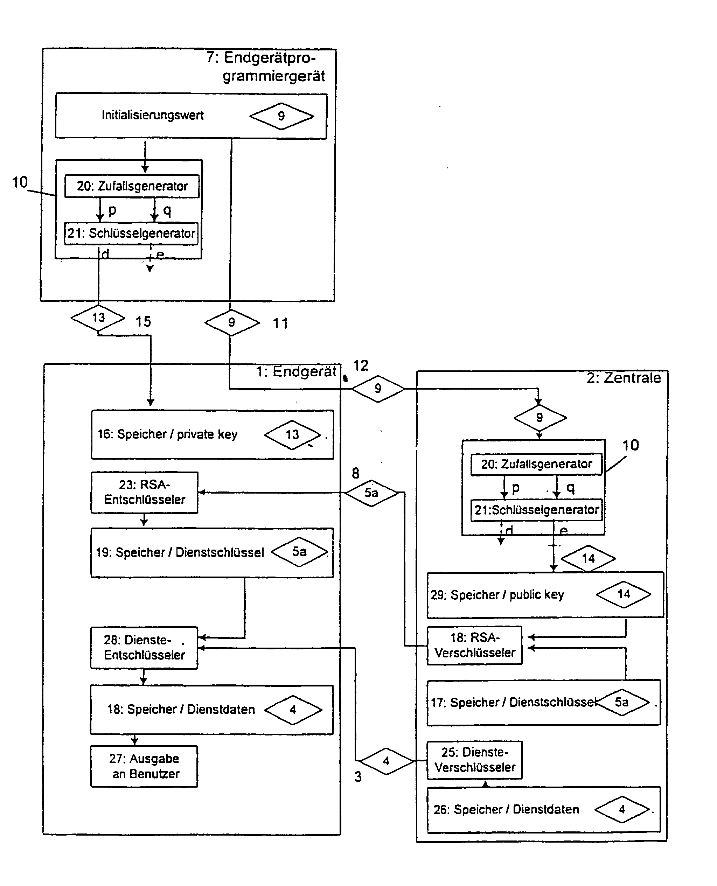

Weitere Merkmale und Vorteile ergeben sich aus der nachfolgenden Beschreibung eines Ausführungsbeispiels anhand der Zeichnung. Dabei zeigt die einzige Figur ein Endgerätprogrammiergerat eines Herstellers, ein Endgerät und eine Zentrale.

Das Endgerät 1 ist ein Telematikendgerät, welches insbesondere in ein Kraftfahrzeug einbaubar ist, und welches insbesondere zum Nutzen von Diensten einer Verkehrstelematik-Zentrale 2 vorgesehen ist. Derartige Dienste können beispielsweise von der Zentrale 2 an das Endgerät 1 übertragene 3 Dienstedaten 4 wie Verkehrsinformationen, Verkehrsprognosen, Navigationshilfedaten etc. sein. Die Übertragung 3 kann per Telekommunikation, insbesondere per Mobilfunk, insbesonders GSM-SMS erfolgen. Sie kann auch über einen der Öffentlichkeit zugänglichen Kommunikationskanal wie einen Radiokanal, insbesondere digitalen Radiokanal, erfolgen. Damit das Endgerät sich bei Kommunikation mit der Zentrale 2 über einen Telekommunikationskanal 3 bei der Zentrale identifizieren kann, bzw. damit hier das Endgerät 1 verschlüsselt über einen offenen Kanal, wie Radio ausgestrahlte Dienstedaten 4, decodieren kann, benötigt das Endgerät ein Geheimnis, welches einem Geheimnis in der Zentrale 2 zugeordnet ist.

Damit das Endgerät 1 von der Zentrale 2 mit einem Dienstschlüssel 5a verschlüsselte und per Funkt etc. ausgestrahlte Dienstedaten 4 verwenden und einem Benutzer darstellen (27) kann, werden die Dienstedaten 4 im Endgerät 1 mittels eines Dienstschlüssels 5a entschlüsselt. Die Dienstschlüssel 5a können bei symmetrischen Codierungs-/Decodierungsverfahren für Verkehrsnachrichten identisch sein bzw. bei asymmetrischen Codierungs-/Decodierungsverfahren einander zugeordnete Public-Key und Private-Key sein.

Dabei ist es zweckmäßig, wenn die Schlüssel im Endgerät und der Zentrale nicht fest implementiert, sondern veränderbar gespeichert sind, so daß endgerätseitige Buchungen von bestimmten Diensten der Zentrale bzw. Abbuchungen von Diensten berücksichtigt werden können. Ferner kann derart relativ einfach eine Zugangsberechtigung zu einem Dienst von einem physikalischen Endgerät entkoppelt werden, was einen Weiterverkauf etc. des Endgerätes unabhängig von der Dienstnutzungsberechtigung ermöglicht.

Um den Dienstschlüssel 5a in das Endgerät einzubringen, wäre es möglich, vom Endgerätprogrammiergerät 7 an das Endgerät und an die Zentrale den gleichen Schlüssel zu übermitteln. Hierzu wäre jedoch der administrative Aufwand beim das Entgerätprogrammiergerät einsetzenden Hersteller etc. des Endgerätes und eine Kommunikation mit der Zentrale erforderlich sowie eine Fehleranfälligkeit gegeben.

Erfindungsgemäß wird der Dienstschlüssel 5a in das Endgerät 1 von der Zentrale 2 aus übermittelt 8. Dabei wird bei der Übermittlung 8 des Dienstschlüssels 5a von der Zentrale 2 an das Endgerät 1 der Dienstschlüssel 5a, welcher in der Zentrale 2 gespeichert ist, verschlüsselt übertragen; die Verschlüsselung des von der Zentrale 2 an das Endgerät 1 zu übermittelnden 8 Dienstschlüssels 5a und die Entschlüsselung des von der Zentrale an das Endgerät 1 verschlüsselt übertragenen 8 Dienstschlüssels 5a erfolgt aufgrund eines zugeordneten Schlüsselpaares 13, 14. Dabei wird jeweils ein Teil des Schlüsselpaares durch einen in der Zentrale 2 und im Endgerätprogrammiergerät 7 wirkungsgleich implementierten Algorithmus aus einem identischen Initialisierungswert 9 generiert:

Der im Endgerätprogrammiergerät 9 beliebig ausgewählte Initialisierungswert 9, der beispielsweise mit einem Zufallsgenerator aus der aktuellen Zeit abgeleitet werden kann, wird für den Algorithmus 10 im Endgerätprogrammiergerät 7 verwendet und andererseits überdies an das Endgerät übermittelt 11 und vom Endgerät unverändert an die Zentrale 1 weiterübermittelt 12. Somit wird mit dem gleichen Initialisierungswert 9 vom Algorithmus 10 im Endgerätprogrammiergerät 7 und vom Ergebnis-identischen Algorithmus 10 in der Zentrale 2 jeweils ein Teil 13 bzw. 14 eines Codierungs-/Decodierungsschlüssel-Paares erzeugt. Der jeweils andere Teil des Codierungs-/Decodierungsschlüssel-Paares 14, 13 wird also jeweils nicht erzeugt oder ignoriert.

Der im Endgerätprogrammiergerät mit einem Initialisierungswert 9 erzeugte Decodierungsschlüssel 13 wird vom Endgerätprogrammiergerät 7 in das Endgerät 1 übertragen. Dies kann beispielsweise beim Hersteller über eine Datenleitung vom Endgerätprogrammiergerät 7 an das Endgerät 1 erfolgen; ebenso ist eine Übertragung 15 vom Endgerätprogrammiergerät 7 an das Endgerät 1 per Telekommunikation, Funk, insbesondere Mobilfunk, insbesondere Mobilfunktkurznachricht (beispielsweise GSM-SMS) möglich. Der vom Endgerätprogrammiergerät 7 in das Endgerät 1 übertragene Decodierungsschlüssel 13 wird in einem Speicher 16 im Endgerät 1 gespeichert. Der identische (vom Endgerätprogrammiergerät 7 über das Endgerät 1 zur Zentrale 2 übertragene) Initialisierungswert 9 wird vom (zum Algorithmus 10 im Endgerätprogrammiergerät 7 wirkungsidentischen) Algorithmus 10 in der Zentrale 2 verwendet, um den zum Decodierungsschlüssel 13 passenden Codierungsschlüssel 14 zu generieren; der (aufgrund des identischen Initialisierungswertes 9) generierte Codierungsschlüssel 14 wird in der Zentrale 2 in einem Speicher 29 abgespeichert.

Der derart in der Zentrale 2 abgelegte Codierungsschlüssel 14 wird verwendet, um mit ihm in einem Verschlüsseler 18 einen in der Zentrale 2 unabhängig hiervon festgelegten und gespeicherten 17 Dienstschlüssel 5a (der im Endgerät 1 ermöglicht, verschlüsselte Dienstedaten wie Verkehrsnachrichten der Zentrale 2 endgerätseitig zu entschlüsseln) zu verschlüsseln; der durch den Verschlüsseler 18 verschlüsselte Dienstschlüssel 5a wird von der Zentrale 2 an das Endgerät 1 übertragen; im Endgerät 1 wird der übertragene 8 Schlüssel 5a mit dem im Endgerät 1 gespeicherten, vorher vom Endgerätprogrammiergerät 7 an das Endgerät 1 übertragenen Decodierschlüssel 13 (welcher zum zentraleseitigen Codierschlüssel 14 paßt) entschlüsselt 13; der entschlüsselte Dienstschlüssel 5a wird im Endgerät 1 in einem Speicher 19 gespeichert.

Der nun im Endgerät 1 gespeicherte Dienstschlüssel 5a ermöglicht dem Endgerät 1, Dienstedaten 4, welche das Endgerät 1 von der Zentrale 2 empfängt, zu entschlüsseln 28 und damit einem Benutzer des Endgerätes zugänglich zu machen.

Hierbei weiß die Zentrale, welchem Endgerät sie welchen Dienstschlüssel übertragen hat.

Evtl. können auch mehrere Dienstschlüssel 5a für mehrere unterschiedliche Dienste der Zentrale wie oben angegeben im Endgerät (und dazu passend in der Zentrale) implementiert werden.

Der Dienstschlüssel 5a kann ein symmetrischer Schlüssel sein. In diesem Falle sind Dienstedaten 4 in der Zentrale 2 mit dem gleichen Schlüssel 5a verschlüsselt 25, mit welchem sie im Endgerät 1 entschlüsselt werden. Femer ist es möglich, ein Schlüsselpaar (RSA) zu verwenden, wobei in der Zentrale 2 mit einem Schlüssel 5b (hier nicht dargestellt) Verkehrsdaten verschlüsselt werden und wobei die Verkehrsdaten im Endgerät 1 mit dem zum Schlüssel 5b passenden Schlüssel 5a entschlüsselt werden. In diesem Falle wird wie oben der Schlüssel 5a im Endgerät implementiert; daher besitzt die Zentrale einen weiteren Schlüssel 5b; ferner ist im Endgerät ein für das Schlüsselpaar 5a, 5b geeignetes Entschlüsselungsalgorithmus für Dienstedaten 4 vorgesehen.

Der im Endgerätprogrammiergerät 7 und in der Zentrale 2 wirkungsidentische Algorithmus 10 erzeugt bei gleichem Initialisierungswert 9 gleiche Schlüsselpaare 13, 14. Er kann insbesondere einen Zufallsgenerator 20 enthalten. Ein derartiger Zufallszahlengenerator 20 liefert bei einem bestimmten Initialisierungswert am Eingang einen (für diesen Initialisierungswert) stets identischen Ausgangswert. Mit einem derartigen Zufallszahlengenerator können beispielsweise zwei Eingangszahlen für einen Schlüsselgenerator generiert werden. Wenn der Schlüsselgenerator 21 ein RSA-Schlüsselgenerator ist, werden vom Zufallsgenerator zwei Zufallszahlen erzeugt, die Primzahlen sind oder aus zwei erzeugten Zufallszahlen zwei diesen zugeordnete Primzahlen, beispielsweise die nächsthöheren Primzahlen, erzeugt und in den Schlüsselgenerator 21 eingegeben. Wenn der Schlüsselgenerator 21 ein RSA-Schlüsselgenerator ist, gibt er als Codierungsschlüssel einen Public-Key und als Decodierungsschlüssel einen Private-Key 13 aus. Beim RSA-Verfahren werden zwei Primzahlen p und q erzeugt; aus diesen wird n = p x q und z = (p - 1) x (q - 1) berechnet. Darauf wird eine Zahl d gesucht, die relativ zu z Primzahl ist. Hierauf wird e gesucht, so daß e x d = 1 mod z gilt. e ist der Codierungsschlüssel 14; die Codierung c einer Zahl p (= Dienst) erfolgt durch Berechnung von c = p^{e} (mod n) in der Zentrale. d ist der Decodierungsschlüssel 13; die Decodierung einer verschlüsselten Zahl c (=4) erfolgt durch Berechnung von p = c^{d} (mod n) im Endgerät. Längere Dienstedaten (4) können byte-weise verschlüsselt werden. n kann im Endgerätprogrammiergerät 7, 10 und in der Zentrale 2, 10 gespeichert sein. Technisch äquivalent zum RSA-Verfahren sind andere Public-Key-Verfahren wie beispielsweise Verfahren zu diskreten Logarithmen, elliptischen Kurven oder Knapsack-Algorithmen.

Die Übertragung 11 des Initialisierungswertes 9 vom Endgerätprogrammiergerät 7 zum Endgerät 1 kann zusammen mit der Übertragung 15 des im Endgerätprogrammiergerät 7 zum Initialisierungswert 9 erstellten Decodierungsschlüssel 13 erfolgen. Die Übertragung 12 des Initialisierungswertes 9 vom Endgerät 1 an die Zentrale 2 kann über einen privaten Kommunikationskanal, insbesondere Telekommunikation, insbesondere Mobilfunk, insbesondere Mobilfunk-Kurznachricht (z.B. GSM-SMS) erfolgen. Gleiches gilt für die Übertragung 8 des Dienstschlüssels 5a von der Zentrale 2 an das Endgerät 1.

## Patentansprüche

1. Verfahren zur Einbringung (7, 15, 12, 8) eines Dienstschlüssels (5a) in ein Endgerät (1),
wobei durch den Dienstschlüssel (5a) von einer Zentrale (2) über einen öffentlichen Kommunikationskanal (3) verschlüsselt (5a) ausgesandte (3) Dienstedaten (4) vom Endgerät (1) entschlüsselbar (23) sind,
wobei im Endgerät (1) ein von einem Endgerätprogrammiergerät (7), welches keine Kommunikationsverbindung zur Zentrale (2) besitzt, erzeugter Initialisierungswert (9) gespeichert wird und ein mit einem Algorithmus (10) aus dem Initialisierungswert (9) erzeugter, dem Endgerät übermittelter (15) Decodierungsschlüssel (13) gespeichert (16) wird und
wobei in der Zentrale (2) ein Algorithmus (10), der dem Algorithmus (10) im Endgerätprogrammiergerät (7) entspricht, verwendet wird, um aus dem der Zentrale (2) übermittelten (7, 12) Initialisierungswert (9) einen zum Decodierungsschlüssel (13) passenden Codierschlüssel (14) zu erzeugen,
wobei der Dienstschlüssel (5a), der in der Zentrale (2) gespeichert (17) ist, mit dem Codierschlüssel (14) codiert (18) wird und wobei der codierte Dienstschlüssel (5a) von der Zentrale (2) an das Endgerät (1) übertragen (8) wird,
wobei der codierte Dienstschlüssel (5a) im Endgerät (1) mit dem Decodierungsschlüssel (13) decodiert (23) wird und wobei der decodierte Dienstschlüssel (5a) im Endgerät (1) gespeichert wird.

2. Verfahren nach Anspruch 1,
**dadurch gekennzeichnet,**
**daß** das Endgerät (1) ein Telematikendgerät ist, daß die Zentrale (2) eine Verkehrszentrale ist und daß die Dienstedaten (4) Verkehrstelematikdaten sind, die von der Zentrale (2) an das Endgerät (1) übermittelt (3) werden.

3. Verfahren nach Anspruch 1 oder 2,
**dadurch gekennzeichnet,**
**daß** der Decodierungsschlüssel ein RSA-Private-Key ist und daß der Codierschlüssel (14) ein dazugehöriger RSA-Public-Key ist.

4. Verfahren nach einem der vorhergehenden Ansprüche,
**dadurch gekennzeichnet,**
**daß** der Algorithmus (10) einen Pseudozufallszahlengenerator enthält.

5. Verfahren nach einem der vorhergehenden Ansprüche,
**dadurch gekennzeichnet,**
**daß** der Algorithmus (10) einen Primzahlengenerator enthält.

6. Verfahren nach einem der vorhergehenden Ansprüche,
**dadurch gekennzeichnet,**
**daß** die Übermittlung (12) des Initialisierungswertes (9) vom Endgeräteprogrammiergerät an das Endgerät und/oder vom Endgerät an die Zentrale (2) per Telekommunikation, insbesondere Mobilfunk, insbesondere Mobilfunkkurznachricht (GSM-SMS) erfolgt.

7. Verfahren nach einem der vorhergehenden Ansprüche,
**dadurch gekennzeichnet,**
**daß** der Dienstschlüssel (5a) als symmetrischer Schlüssel ausgebildet ist und in der Zentrale (2) zum Verschlüsseln und im Endgerät (1) zum Entschlüsseln von Dienstedaten verwendet wird.

## Claims

1. Method of introducing (7, 15, 12, 8) a service key (5a) into a terminal (1),
in which, by means of the service key (5a), service data (4) which are sent out (3) from a central control unit (2) via a public communications channel (3) in encrypted form (5a) can be decrypted (23) by the terminal (1),
in which, in the terminal (1), an initialisation value (9) is stored which is generated by a terminal programmer (7) that has no communications link to the central unit (2), and
a decoding key (13) is stored (16) which is generated with an algorithm (10) from the initialisation value (9) and is transmitted (15) to the terminal, and
in which an algorithm (10) is used at the central unit (2) which is the same as the algorithm (10) in the terminal programmer (7), in order to generate, from the initialisation value (9) sent (7, 12) to the central unit (2), a coding key (14) that matches the decoding key (13),
in which the service key (5a) which is stored (17) at the central unit (2) is enciphered (18) with the coding key (14), and in which the enciphered service key (5a) is transmitted (8) from the central unit (2) to the terminal (1),
in which the enciphered service key (5a) is decoded (23) at the terminal (1) with the decoding key (13), and in which the decoded service key (5a) is stored at the terminal (1).

2. Method as in Claim 1,
**characterised in that**
the terminal (1) is a telematics terminal, **in that** the central unit (2) is a traffic control centre, and **in that** the service data (4) are traffic telematics data which are transmitted (3) from the central unit (2) to the terminal (1).

3. Method as in Claim 1 or 2,
**characterised in that**
the decoding key is an RSA private key and **in that** the enciphering key (14) is an RSA public key that goes with it.

4. Method as in one of the preceding Claims,
**characterised in that**
the algorithm (10) contains a pseudo-random number generator.

5. Method as in one of the preceding Claims,
**characterised in that**
the algorithm (10) contains a prime number generator.

6. Method as in one of the preceding Claims,
**characterised in that**
the transmission (12) of the initialisation value (9) from the terminal programmer to the terminal and/or from the terminal to the central unit (2) is effected by telecommunication, in particular by mobile radio, in particular by mobile radio text messaging (GSM-SMS).

7. Method as in one of the preceding Claims,
**characterised in that**
the service key (5a) is in the form of a symmetrical key and is used at the central unit (2) for the encryption and at the terminal (1) for the decryption of service data.

## Revendications

1. Procédé destiné à l'insertion (7, 15, 12, 8) d'une clé de service (5a) dans un terminal (1),
des données de service (4), émises (3) à l'état codé (5a) par la clé de service (5a) à partir d'un central (2) par l'intermédiaire d'un canal de communication public (3), pouvant être décodées (23) par le terminal (1),
une valeur d'initialisation (9) générée par un appareil de programmation (7) du terminal, qui n'est pas en liaison de communication avec le central (2), étant mémorisée dans le terminal (1), et une clé de décodage (13) générée avec un algorithme (10) à partir de la valeur d'initialisation (9), transmise (15) au terminal, étant mémorisée (16), et
un algorithme (10), qui correspond à l'algorithme (10) de l'appareil de programmation (7) du terminal, étant utilisé dans le central (2) afin de générer à partir de la valeur d'initialisation (9) transmise (7, 12) au central (2) une clé de codage (14) correspondant à la clé de décodage (13), la clé de service (5a), qui est mémorisée (17) dans le central (2), étant codée (18) avec la clé de codage (14), et la clé de service (5a) codée étant transmise (8) par le central (2) au terminal (1),
la clé de service (5a) codée étant décodée (23) dans le terminal (1) avec la clé de décodage (13), et la clé de service (5a) décodée étant mémorisée dans le terminal (1).

2. Procédé selon la revendication 1,
**caractérisé en ce que**
le terminal (1) est un appareil télématique, **en ce que** le central (2) est un central de circulation, et **en ce que** les données de service (4) sont des données télématiques de circulation qui sont transmises (3) au terminal (1) par le central (2).

3. Procédé selon la revendication 1 ou 2,
**caractérisé en ce que**
la clé de décodage est une clé privée RSA, et **en ce que** la clé de codage (14) est une clé publique RSA en faisant partie.

4. Procédé selon l'une quelconque des revendications précédentes,
**caractérisé en ce que**
l'algorithme (10) contient un générateur de nombres pseudo-aléatoires.

5. Procédé selon l'une quelconque des revendications précédentes,
**caractérisé en ce que**
l'algorithme (10) contient un générateur de nombres premiers.

6. Procédé selon l'une quelconque des revendications précédentes,
**caractérisé en ce que**
la transmission (12) de la valeur d'initialisation (9) par l'appareil de programmation du terminal au terminal et/ou par le terminal au central (2) est effectuée par télécommunication, notamment par radiotéléphonie mobile, notamment par radiotéléphonie mobile à messages courts (GSM-SMS).

7. Procédé selon l'une quelconque des revendications précédentes,
**caractérisé en ce que**
la clé de service (5a) est agencée sous la forme d'une clé symétrique, et est utilisée dans le central (2) pour le codage et dans le terminal (1) pour le décodage de données de service.
